## Europäisches Patentamt

## European Patent Office

## Office européen des brevets

(11) Veröffentlichungsnummer: **0 168 760**
**B1**

(12) **EUROPÄISCHE PATENTSCHRIFT**

(45) Veröffentlichungstag der Patentschrift:
**27.09.89**

(21) Anmeldenummer: **85108550.6**

(22) Anmeldetag: **10.07.85**

(51) Int. Cl.⁴: **G 11 B 5/70, G 11 B 5/842**

(54) Verfahren zur Herstellung von magnetischen Aufzeichnungsträgern.

(30) Priorität: **18.07.84 DE 3426366**

(43) Veröffentlichungstag der Anmeldung:
**22.01.86 Patentblatt 86/4**

(45) Bekanntmachung des Hinweises auf die Patenterteilung:
**27.09.89 Patentblatt 89/39**

(84) Benannte Vertragsstaaten:
**DE FR GB NL**

(73) Patentinhaber: **BASF Aktiengesellschaft,
Carl-Bosch-Strasse 38, D-6700 Ludwigshafen (DE)**

(72) Erfinder: **Melzer, Milena, Kirchenstrasse 116,
D-6700 Ludwigshafen (DE)**
Erfinder: **Schneider, Norbert, Madenburgerstrasse 5 f,
D-6701 Altrip (DE)**
Erfinder: **Jakusch, Helmut, Dr., Lorscher Ring 6 c,
D-6710 Frankenthal (DE)**
Erfinder: **Balz, Werner, Dr., Kropsburgstrasse 44,
D-6703 Limburgerhof (DE)**

(56) Entgegenhaltungen:
**PATENT ABSTRACTS OF JAPAN, Band 6, Nr. 206
(P-149)[1084], 19. Oktober 1982; & JP - A - 57 113 421
PATENT ABSTRACTS OF JAPAN, Band 8, Nr. 55
(P-260)[1492], 13. März 1984; & JP - A - 58 203 627**

## Beschreibung

Die Erfindung betrifft ein Verfahren zur Herstellung von magnetischen Aufzeichnungsträgern durch Herstellen einer Dispersion bestehend aus feinteiligem magnetischem Material, einem Dispergierhilfsmittel, den üblichen Zusatzstoffen und einer Lösung oder einer Dispersion eines Polymerbindemittels, schichtförmiges Auftragen der Dispersion auf ein magnetisierbares Trägermaterial, anschliessendes Ausrichten des anisotropen magnetischen Materials in einem Magnetfeld und Trocknen der aufgebrachten Schicht.

An Magnetschichten, die in modernen Audio-, Video- und Datenaufzeichnungs- und Wiedergabegeräten verwendet werden, werden Anforderungen in mehrfacher Hinsicht gestellt. Neben hervorragenden mechanischen Eigenschaften im Hinblick auf Flexibilität, Elastizität, Reiss- und Abriebfestigkeit, wird vor allem bei den Aufzeichnungs- und Wiedergabeeigenschaften, besonders für die Anwendung von Kassettentonbändern, Spulentonbändern und Videobändern eine stetige Verbesserung gefordert. Um dieses Ziel zu erreichen, ist es erforderlich, ausser der Verwendung besonders geeigneter Magnetpigmente, wie feinteilige Eisenoxide, Chromdioxid, cobaltdotierten Eisenoxiden und ferromagnetischen Metallteilchen, die in der Magnetschicht insgesamt enthaltenen Materialien so auszuwählen, dass die Magnetschichten eine besonders hohe remanente Magnetisierung in der Aufzeichnungsrichtung und eine ausgeprägt glatte Oberfläche aufweisen. Solche Magnetschichten müssen zwar einen hohen Anteil an magnetisierbarem Material in der Magnetschicht besitzen, aber die magnetisierbaren nadelförmigen Teilchen müssen sich in der Magnetschicht sehr gleichmässig verteilen und auch sehr stark entlang der vorgesehenen Aufzeichnungsrichtung orientieren lassen. Gerade die Verbesserung der genannten Eigenschaften, wie Oberflächenrauhigkeit, Schaltfeldverteilung, Remanenz und Ausrichtungsgrad lassen sich bei ein und demselben magnetischen Material in hohem Masse auch von den zur Herstellung der Magnetschicht verwendeten Bindemitteln und Zusatzstoffen beeinflussen. Diese wirken sich auf Abriebverhalten, Reibungseigenschaften und andere, die praktische Verwendbarkeit der Aufzeichnungsträger und die Lebensdauer beeinflussende Eigenschaften aus. Aus der Reihe der Zusatzstoffe sind es in erster Linie die Dispergierhilfsmittel, welche durch die Verbesserung der Magnetpigmentverteilung, der Ausrichtung, der Verdichtung in den polymeren Bindemitteln, die Aufzeichnungs- und Wiedergabeeigenschaften sowie die mechanischen Eigenschaften der Magnetschicht beeinflussen.

Die Verminderung der Oberflächenrauhigkeit der Magnetschicht ist bei hochwertigen magnetischen Aufzeichnungsträgern besonders wichtig, da für die Auflösung kleinster Wellenlängen ein besonders enger Band/Kopf-Kontakt erforderlich ist. Jede Unebenheit führt zu einem Abstandseffekt zwischen Bandoberflächen und Kopfspalt und damit zu Signalverlusten bei hohen Frequenzen. Es ist Stand der Technik, magnetische Aufzeichnungsträger nach dem Beschichtungsvorgang durch Hindurchführen durch beheizte, unter Druck stehende Walzen zu glätten. Der dabei erreichbare Glättungsgrad hängt jedoch weitgehend von der ursprünglichen Glätte der getrockneten Schicht nach dem Giessvorgang ab. Ursprünglich sehr rauhe Schichten können bei diesem Glättungsvorgang nicht so glatt werden wie Schichten, die bereits vor dem Glättungsvorgang eine geringe Rauhigkeit aufweisen.

Üblicherweise werden die Dispergierhilfsmittel bereits zu Beginn des Dispergiervorganges den übrigen Ausgangsstoffen der Mangetdispersion zum Zwecke der leichteren Verteilung des magnetischen Materials zugesetzt. Hierfür werden in erster Linie oberflächenaktive Substanzen eingesetzt, deren Molekülstrukturen einen hydrophilen und einen hydrophoben Rest aufweisen und deren wirksame Struktur anionischen, kationischen, amphoteren oden nichionischen Charakter besitzt. Diese Dispergiermittel erfordern eine sehr sorgfältige Abstimmung der angewandten Menge auf die Gesamtrezeptur, da es unter ungünstigen äusseren Bedingungen sehr leicht vorkommen kann, dass Überschüsse dieser Substanzen an die Oberfläche des Magnetogrammträgers austreten und dort Ablagerungen und Verschmutzungen der bandführenden Geräteteile verursachen, was äusserst unerwünscht ist. Bei den meisten Dispergiermitteln ist des weiteren festzustellen, dass bei Erreichen einer gewissen Konzentration, die einer Sättigungsbelegung der aktiven Zentren der Magnetpigmentoberfläche entspricht, eine weitere Verbesserung der Dispergierbarkeit und damit der erreichbaren Verdichtung und Ausrichtbarkeit der magnetischen Materialien nicht festgestellt werden kann, und dass die mechanischen Eigenschaften der Magnetschicht, insbesondere das Abriebverhalten sich mit zunehmender Dosierung der Dispergiermittel verschlechtern.

Der Erfindung lag daher als Aufgabe zugrunde, ein Verfahren zur Herstellung magnetischer Aufzeichnungsträger bereitzustellen, die sich durch eine günstige Verteilung der Magnetteilchen in der Magnetschicht, vor allem durch günstige Schaltfeldverteilung, hohen Richtfaktor, hohe magnetische Remanenz und somit sehr gute Aufzeichnungseigenschaften auszeichnen, eine glatte Oberfläche der Magnetschicht haben und gutes Abriebverhalten und gute Reibungseigenschaften gewährleisten.

Es wurde nun gefunden, dass sich magnetische Aufzeichnungsträger durch Herstellen einer Dispersion bestehend aus feinteiligem magnetischen Material, einem Dispergierhilfsmittel, den üblichen Zusatzstoffen und einer Lösung oder einer Dispersion eines Polymerbindemittels, schichtförmiges Auftragen der Dispersion auf ein nichtmagnetisierbares Trägermaterial, anschliessendes Ausrichten des anisotropen magnetischen Materials mittels eines Magnetfeldes und Trocknen der aufgebrachten Schicht mit den geforderten Eigenschaften erhalten lassen, wenn das eingesetzte Dispergierhilfsmittel durch Umsetzung von

A. 70 bis 95 Gewichtsteilen eines Reaktionsproduktes aus
I. 0,5 bis 1,5 Mol Oxoalkoholen mit 6 bis 20 Kohlenstoffatomen,
II. 6 bis 18 Mol Ethylenoxid und
III. 2 bis 10 Mo Propylenoxid mit
B. 5 bis 30 Gewichtsteilen Polyphosphorsäure mit einem $P_2O_5$-Gehalt von 80 bis 88% erhalten wird.

In einer besonders vorteilhaften Ausgestaltung des erfindungsgemässen Verfahrens wird das eingesetzte Dispergierhilfsmittel durch Umsetzung von

A. 90 Gewichtsteilen eines Reaktionsproduktes aus
I. 1 Mol Oxoalkohol mit 13 bis 15 Kohlenstoffatomen
II. 12 Mol Ethylenoxid
III. 6 Mol Propylenoxid mit
B. 10 Gewichtsteilen einer Polyphosphorsäure mit einem $P_2O_5$-Gehalt von 84% erhalten.

Die Herstellung des für das erfindungsgemässe Verfahren eingesetzten Dispergierhilfsmittels erfolgt durch Umsetzung des Oxoalkohols (Komponente A.I.) unter Einwirkung von starkem Alkali mit dem Ethylen- und Propylenoxid in den angegebenen Mengenverhältnissen. Das dabei entstehende Reaktionsprodukt wird anschliessend, anch der Neutralisation des Alkalianteils, mit der Polyphosphorsäure (Komponente B) umgesetzt.

Dieses bei dem erfindungsgemässen Verfahren eingesetzte Dispergierhilfsmittel wird der zu dispergierenden Mischung in einer Menge von 0,5 bis 10, vorzugsweise 1,5 bis 5 Gewichtsprozent, bezogen auf die Menge des magnetischen Materials, zugegeben. Werden zum Aufbau der Magnetschicht weitere an sich übliche Zusatzstoffe benutzt, die neben anderen Effekten, wie der Verbesserung der Gleiteigenschaften oder des Verlaufs, auch die Dispergierung unterstützen, so bleibt die vorteilhafte Wirkung des Dispergierhilfsmittels gemäss der Erfindung auch dann erhalten.

Die Zusammensetzung und Herstellung der Dispersion der magnetischen Materialien entspricht den an sich üblichen Verfahren.

Als magnetische Materialien werden bevorzugt feinteiliges stäbchenförmiges Gamma-Eisen(III)oxid mit einer durchschnittlichen Teilchengrösse von 0,1 bis 2 µm und insbesondere von 0,1 bis 0,9 µm oder stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere von Kobalt sowie feinteilige Metalllegierungen von Eisen, Kobalt und/oder Nickel.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomer, Mischung von Polyisocyanaten und höhermolekularen Polyhydroxylverbindungen oder Vinylchloridpolymerisate mit über 60% an Vinylchlorid-Moleköulbausteinen, z.B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomerem oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und PVC-Copolymerisaten der oben angegebenen Zusammensetzung. Als Polyurethanelastomere-Binder werden handelsübliche elastomere Polyurethane aus Adipinsäure, 1,4-Butandiol und 4,4'-Diisocyanatodiphenylmethan bevorzugt angewandt.

Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundären Aminoalkohols und gegebenenfalls eines Triols mit einem Diisocyanat erhalten werden.

Magnetdispersionen, die sich besonders für die Herstellung von starren magnetischen Aufzeichnungsplatten eignen, enthalten bevorzugt Bindemittel wie Epoxidharze, Phenoxyharze, Aminoplast-Vorkondensate, Polyesterharze, Polyurethane oder Polyurethanbildner und Mischungen solcher Bindemittel miteinander als auch mit anderen Bindemitteln, wie Polycarbonaten oder Vinylpolymeren, z.B. Vinylchlorid- oder Vinylidenchlorid-Copolymer oder hitzehärtbare Acrylat- oder Methacrylat-Copolymere.

In gleicher Weise lassen sich als Bindemittel auch wässrige Dispersionen organischer Polymerer verwenden. Besonders geeignet sind hierfür Polyurethanionomere, wie sie z.B. in den DE-OSen 2 920 334 und 3 005 009 beschrieben sind.

Den Dispersionen können weitere Zusatzstoffe zur Herstellung der Magnetschichten, beispielsweise geringe Monocarbonsäureanteile, Gemische oder Ester derselben sowie Füllstoffe, wie Russ, Graphit, Quarzmehl und/oder nicht magnetisierbares Pulver auf Silicatbasis und Mittel zur Verbesserung des Verlaufs, wie geringe Mengen Siliconöl, zugesetzt werden. Diese Zusätze sollen zweckmässigerweise insgesamt 12 Gewichtsprozent, bevorzugt 8 Gewichtsprozent, bezogen auf das magnetische Material, nicht überschreiten.

Die Herstellung der Magnetdispersion erfolgt in bekannter Weise. Hierzu wird das magnetische Material mit einem Teil der verwendeten Bindemittellösungen, ausreichender Lösungsmittelmenge sowie Dispergiermittel in einer Dispergiereinrichtung, z.B. einer Topfkugelmühle oder Rührwerkskugelmühle, gegebenenfalls unter Zusatz von anderen Zusatzstoffen dispergiert. Die Dispergierung wird so lange fortgeführt, bis eine erwünschte feine Verteilung des magnetischen Materials erreicht wird. Danach wird der Rest der Bindemittellösungen sowie übrige Zusatzstoffe zugesetzt und durch weiteres Dispergieren bzw. intensives Rühren mit übriger Dispersion homogenisiert. In manchen Fällen ist es auch möglich, die gesamten Bestandteile der Dispersion in die Mühle einzufüllen und einphasig zu dispergieren. Durch anschliessendes wiederholtes Filtrieren erhält man eine völlig homogene Magnetdispersion.

Die Magnetdispersion wird nun mit Hilfe üblicher Beschichtungsmaschinen, z.B. mittels eines Linealgiessers, auf den nichtmagnetisierbaren Träger aufgetragen. Dabei kann es je nach Verwendungszweck des resultierenden magnetischen Aufzeichnungsträgers zweckmässig sein, unmittelbar vor dem Aufbringen der Dispersion, dieser Isocyanate oder andere vernetzend wirkende Stoffe zuzusetzen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 1 bis 200 µm und insbesondere von 6 bis 36 µm. Bevor die noch flüssige Beschichtungsmischung auf dem Träger getrocknet wird, was zweckmässigerweise bei Temperaturen von 50 bis 90 °C während 2 bis 5 Minuten geschieht, werden die anisotropen Magnetteilchen durch die Einwirkung eines Magnetfeldes entlang der vorgesehenen Aufzeichnungsrichtung orientiert. Anschliessend können die Magnetschichten auf üblichen Maschinen durch Hindurchführen zwischen geheizten und polierten Walzen, gegebenenfalls bei Anwendung von Druck und Temperaturen von 50 bis 100 °C, vorzugsweise 60 bis 80 °C, geglättet und verdichtet werden. Die Dicke der Magnetschicht beträgt im allgemeinen 1 bis 20 µm.

Die erfindungsgemäss hergestellten magnetischen Aufzeichnungsträger zeichnen sich durch verbesserte Feinstruktur der Magnetschicht und damit durch eine geringe Rauhigkeit der Oberfläche sowie durch verbesserte Schaltfeldverteilung, Richtfaktor und Remanenz, aus. Dadurch ergibt sich eine Anhebung des Wiedergabepegels und der Aussteuerbarkeit sowohl bei niederen als auch bei hohen Frequenzen. Weitere Vorteile der erfindungsgemäss hergestellten Aufzeichnungsträger liegen in verbesserten mechanischen Eigenschaften der Magnetschicht, insbesondere des Abriebverhaltens und Reibungszahlen und damit verbesserter Lebensdauer. In gleichem Mass vorteilhaft wirkt sich das erfindungsgemässe Verfahren auch hinsichtlich der Aufzeichnungsträger für die Video- und Datenaufzeichnung aus. Neben der bereits aufgezeigten Verbesserung der Homogenität und der mechanischen Eigenschaften der Schicht zeigt sich bei Videoaufzeichnungsträgern eine Verbesserung im Signal-Rausch-Verhältnis, im HF-Pegel und bei der Fehlerzahl während bei Datenaufzeichnungsträgern eine Verbesserung von Pegel, Auflösung und Überschreibbarkeit festzustellen ist.

Phosphorsäurederivate wie in den japanischen Patentanmeldungen 57 113 421, 57 152 535, 57 152 536, 57 205 461, 54 094 308, 58 141 439 und 58 141 440 offenbart, sind als Dispergiermittel oder sonstige Hilfsmittel bei Herstellung von magnetischen Aufzeichnungsträger bekannt. In ihrer Wirkung erreichen sie jedoch nicht die mechanischen Eigenschaften, insbesondere beim Abriebsverhalten und bei den Reibungswerten der damit hergestellten Magnetschichten und somit nicht die Lebensdauer und die Anwendungssicherheit derjenigen magnetischen Aufzeichnungsträger, die nach dem erfindungsgemässen Verfahren hergestellt wurden.

Ein weiterer Unterschied besteht darin, dass bei diesen bekannten Mitteln bei Dosierungen über die der Sättigungsbelegung der Magnetpigmentoberfläche entsprechenden Mengen hinaus sich die mechanischen Eigenschaften der Magnetschicht wie das Abriebverhalten und die Reibungswerte zunehmend verschlechtern, während gemäss dem erfindungsgemässen Verfahren auch bei stark über die Sättigungsbelegung des Pigments gehenden Überdosierungen, günstige Reibungswerte und gute Abriebsverhalten erhalten bleiben.

Die Vorteile des erfindungsgemässen Verfahrens werden an den folgenden Beispielen aufgezeigt.

Beispiel A

In einem 3 l Autoklaven wurden 258 g Oxoalkohol vorgelegt und 3 g Ätzkalischuppen zugegeben. Der Apparat wurde unter Erhitzen bis zu einer Temperatur von 120 °C evakuiert (3 mm Hg). Dann wurde das Vakuum mit Stickstoff aufgehoben und portionsweise eine Mischung aus 724 g Ethylenoxid und 537 g Propylenoxid zugegeben. Nach einer Reaktionszeit von 3 Stunden wurde das Produkt auf 70 °C abgekühlt und mit Essigsäure neutralisiert. Es wurden dann 233 g Polyphosphorsäure (84% $P_2O_5$) zugegeben und der Ansatz 6 Stunden gerührt. Das resultierende Produkt wurde als Dispergierhilfsmittel eingesetzt.

Beispiel 1

In Stahlkugelmühlen von 6 l Rauminhalt, gefüllt mit 8 kg Stahlkugeln eines Durchmessers von 4 bis 6 mm, wurden 900 g eines aus $\alpha$-FeOOH hergestellten $\gamma$-Fe$_2$O$_3$ mit einer Koerzitivfeldstärke von 30 kA/m und einer spezifischen Oberfläche von 23,7 m$^2$/g, sowie a) 31,5 g des Produkts gemäss Beispiel A bzw. b) 40,5 g des Produkts gemäss Beispiel A, jeweils zusammen mit 850 g eines Lösungsmittelgemischtes aus gleichen Teilen Tetrahydrofuran und Dioxan, 276,9 g einer 13%igen Lösung eines Polyesterpolyurethans vom K-Wert 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in oben genanntem Lösungsmittelgemisch und 120,l g einer 20%igen Lösung eines Copolymers aus Vinylchlorid, Dimethylmaleinat und Diethylmaleinat im Verhältnis 80/10/10 und einem K-Wert von 60 in oben genanntem Lösungsmittelgemisch eingefüllt und 90 Stunden lang dispergiert. Dann wurden in der Nachphase 578 g Polyurethanlösung, 250 g Copolymerlösung, 0,9 g Siliconöl, 0,9 g Hydrochinon, 1,8 g n-Butylstearat und 9 g Isostearinsäure zugegeben. Nach 2 weiteren Stunden Dispergierzeit wurde die Dispersion aus der Mühle entnommen und unter Druck durch einen Filter mit 5 μm Poren filtriert. Nach der Filtration wurden unter kräftigem Rühren pro kg Dispersion 6,7 g einer 75%igen Lösung eines Triisocyanates aus 3 Mol Toluylendiisocyanat und 1 Mol Trimethylolpropan in Ethylacetat zugegeben. Unmittelbar danach wurde die Dispersion auf eine 12 μm dicke Polyethylenterephthalatfolie mittels eines üblichen Linealgiessers aufgetragen. Die beschichtete Folie wurde nach Durchlaufen eines Magnetfeldes zum Ausrichten der Magnetteilchen bei Temperaturen zwischen 50 und 90°C getrocknet. Nach der Trocknung wurde die Magnetschicht durch Hindurchziehen zwischen auf 70°C beheizten Walzen unter einem Liniendruck von 200 kp/cm verdichtet und geglättet (satiniert), so dass die Dicke der Magnetschicht 4,5 μm betrug und dann in 3,81 mm breite Bänder für Audioanwendung geschnitten.

Die Rauhigkeit der Magnetschicht wurde perthometrisch, der Glanz mit dem Reflektrometer der Firma Lange (Messkopf 60°), gemessen. Die Messung der magnetischen Eigenschaften wurde in einem Messfeld von 100 kA/m durchgeführt. Die elektroakustischen Werte wurden gemäss DIN 45401, DIN 45403 und DIN 45512, Bl. 12 gegen das Bezugsband IEC I bestimmt.

Die mechanischen Bandeigenschaften wurden nach folgenden Tests geprüft:

Reibungskoeffizient, Schicht/Stahl, vor/nach Dauerlauf

Die Bestimmung der Reibungszahlen erfolgt nach DIN 45522, Blatt 1. Die Reibungskoeffizienten werden am unbenutzten Band und am durch Dauerlauf benutzten Band gemessen.

Quasistatische Reibung

Die Reibungszahl wird durch Messen einer Zugkraft bestimmt, die ein über eine feststehende Messtrommel geführtes Magnetband durch Reibung erzeugt. Die Messtrommel ist eine Stahltrommel mit einer Oberflächenrauhigkeit von ca. 0,15 μm und einem Durchmesser von 70 mm. Das Bandstück ist 25 cm lang und wird bei einem Bandzug von 20 cN mit einer Geschwindigkeit von 1 mm/sec und einem Umschlingungswinkel von 180° über die Trommel geführt. Der Zug an der Messdose F ist ein Mass für die Reibungszahl μ und zwar nach

$$\mu = \frac{1}{\pi} \cdot \ln\frac{F}{20}.$$

Abriebverhalten am Recorder

Die Zahl der Durchläufe am Recorder Typ Kennwood-Trio KX bis zum Pegelabfall > 2 dB wird als Lebensdauer angegeben; der dabei entstandene Abrieb am Löschköpf, Tonkopf und an der Tonwelle wird mittels Klebebandes abgezogen und nach einer Benotungsskala mit Zahlen von 1 (kein Abrieb) bis 6 (sehr starker Abrieb) benotet.

Kreiden

Das Band mit einer Schleifenlänge von 167 cm wird mit Geschwindigkeit von 24 cm/sec über ein Schleifpapier gezogen, wobei der Bandzug 50 p beträgt. Nach der Laufzeit von 7 min. (= ca. 60 Schleifendurchläufen) wird die durch Abrieb auf dem Papier entstandene Färbung beurteilt und nach einer Notenskala benotet, in der Note 1 keine Färbung und Note 10 sehr starke Färbung bedeutet.

Die Prüfergegnisse sind in der Tabelle 1 angegeben.

Vergleichsversuch 1

Es wurde wie im Beispiel 1 beschrieben verfahren, jedoch wurden anstelle des Dispergierhilfsmittels gemäss Beispiel 1, a) 63 g bzw. b) 81 g eines handelsüblichen Dispergiermittels aus einer Mischung eines Monophosphorsäureesters und dem Salz einer Sulfobernsteinsäure in 50%iger wässriger Lösung bestehend, verwendet.

Vergleichsversuch 2

Es wurde wie in Beispiel 1 beschrieben verfahren, jedoch wurden anstelle des Dispergierhilfsmittels gemäss Beispiel A, a) 31,5 g bzw. b) 40,5 g eines handelsüblichen alkoxylierten sauren Phosphorsäureester mit der Produktbezeichnung Gafac RA 600 von Fa. GAF Corp., verwendet.

Vergleichsversuch 3

Es wurde wie im Beispiel 1 verfahren, jedoch wurden anstelle des Dispergierhilsmittels gemäss Beispiel A, a) 31,5 g bzw. b) 40,5 g eines handelsüblichen alkoxylierten sauren Phosphorsäureesters mit der Produktbezeichnung Gafac RM 710 von Fa. GAF Corp., verwendet.

Vergleichsversuch 4

Es wurde wie im Beispiel 1 verfahren, jedoch wurden anstelle des Dispergierhilfsmittels gemäss Beispiel A, a) 31,5 g bzw. b) 40,5 g eines handelsüblichen alkoxylierten sauren Phosphorsäureesters mit der Produktbezeichnung Gafac RE 610 von Fa. GAF Corp., verwendet.

Vergleichsversuch 5

Es wurde wie im Beispiel 1 verfahren, jedoch wurden anstelle des Dispergierhilfsmittels gemäss Beispiel A, a) 31,5 g bzw. b) 41,5 g eines handelsüblichen alkoxylierten sauren Phosphorsäureester, mit der Produktbezeichnung Dextrol OC 20 von Boehringer KG (Ingelheim), verwendet.

Vergleichsversuch 6

Es wurde wie im Beispiel 1 verfahren, jedoch wurden anstelle des Dispergierhilfsmittels gemäss Beispiel A a) 31,5 g bzw. b) 40,5 g eines handelsüblichen alkoxylierten sauren Phosphorsäureesters mit der Produktbezeichnung Dextrol OC 70 von Fa. Boehringer KG, verwendet.

Die Prüfergebnisse der Vergleichsversuche sind ebenfalls in der Tabelle 1 zusammengestellt.

Die in Tabelle 1 aufgeführten Ergebnisse zeigen, dass durch den Einsatz des Dispergierhilfsmittels gemäss Beispiel A sowohl die Magnetwerte, insbesonders die Schaltfeldverteilung (SFD), als auch die gesamten elektroakustischen Daten verbessert wurden. Die Verbesserung der Feinstruktur der Magnetschicht lässt sich auch anhand der besseren Bandoberfläche bereits vor der Satinage, durch Rauhigkeit und Glanz charakterisiert, ersehen. Deutliche Überlegenheit zeigt sich darüber hinaus in den Reibungswerten Schicht/Stahl vor und nach Dauerlauf, in der quasistatischen Reibung und im Abriebverhalten am Recorder. Dies wirkt sich in einer verbesserten funktionellen Zuverlässigkeit und Lebensdauer der magnetischen Aufzeichnungsträger aus. Weiter zeigt sich, dass bei Einsatz des Dispergierhilfsmittels nach Beispiel A eine Überdosierung unkritisch ist.

Beispiel 2

In Stahlkugelmühle von 6 l Rauminhalt, gefüllt mit 8 kg Stahlkugeln vom Durchmesser 4 bis 6 mm, wurden 900 g eines Co-dotierten $\gamma$-Fe$_2$O$_3$ mit einer Koerzitivfeldstärke von 30 kA/m und einer spezifischen Oberfläche von 25,8 m²/g, zusammen mit 45,0 g des Dispergierhilfsmittels gemäss Beispiel A, 850 g eines Lösungsmittelgemisches aus gleichen Teilen Tetrahydrofuran und Dioxan, 276,9 g einer 13%igen Lösung eines Polyesterpolyurethans von K-Wert 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in oben genanntem Lösungsmittelgemisch und 120,1 g einer 20%igen Lösung eines Copolymers aus Vinylchlorid, Dimethylmaleinat und Diethylmaleinat im Verhältnis 80/10/10 und einem K-Wert von 60 in oben genanntem Lösungsmittelgemisch eingefüllt und 40 Stunden lang dispergiert. Dann wurden in der Nachphase 578 g Polyurethanlösung, 250 g Copolymerlösung, 0,9 g Siliconöl, 0,9 g Hydrochinon, 1,8 g n-Butylstearat und 9 g Isostearinsäure zugegeben. Nach 2 weiteren Stunden Dispergierzeit wurde die Dispersion aus der Mühle entnommen und unter Druck durch einen Filter mit 5 µm Poren filtriert. Nach der Filtration wurden unter kräftigem Rühren pro kg Dispersion 6,7 g einer 75%igen Lösung eines Triisocyanats aus 3 Mol Toluylendiisocyanat und 1 Mol Trimethylolpropan in Ethylacetat zugegeben. Unmittelbar danach wurde die Dispersion auf eine 12 µm dicke Polyethylenterephthalatfolie mittels eines üblichen Linealgiessers aufgetragen. Die beschichtete Folie wurde nach Durchlaufen eines Magnetfeldes zum Ausrichten der Magnetteilchen bei Temperaturen zwischen 50 und 90°C getrocknet. Nach der Trocknung wurde die Magnetschicht durch Hindurchziehen zwischen auf 70°C beheizten Walzen unter einem Liniendruck von 200 kp/cm verdichtet und geglättet (satiniert), so dass die Dicke der Magnetschicht 4,5 µm betrug und dann in 3,81 mm breite Bänder für Audioanwendung geschnitten.

Die Messung der Bandeigenschaften erfolgte in gleicher Weise wie im Beispiel 1. Die Messergebnisse sind in der Tabelle 2 zusammengestellt.

Vergleichsversuch 7

Es wurde wie im Beispiel 2 beschrieben verfahren, mit dem Unterschied, dass anstelle des Dispergierhilfsmittels gemäss Beispiel A 63 g eines handelsüblichen Dispergiermittels, aus einer Mischung eines Monophosphorsäureesters und dem Salz einer Sulfobernsteinsäure in 50%iger wässriger Lösung bestehend (Serad Fa 601), verwendet wurde.

Die Prüfergebnisse dieses Vergleichsversuchs sind in der Tabelle 2 angegeben.

Die Dosierung des Dispergierhilfsmittels im Beispiel 2 sowie des Dispergierhilfsmittels im Vergleichsversuch 7 entsprach jeweils der zur Sättigungsbelegung.

Aus dem Vergleich der Messwerte in der Tabelle 2 ergibt sich, dass das Produkt nach Beispiel 2 im Vergleich zu Vergleichsversuch 7 bessere Ergebnisse hinsichtlich der Magnetwerte, insbesondere der Koerzitivfeldstärke, der Schaltfeldverteilung und der gesamten elektroakustischen Daten aufweist. Die verbesserte Feinstruktur der Magnetschicht ist auch aus der besseren Bandoberfläche bereits vor der Satinage, mit Rauhigkeit und Glanz charakterisiert, ersichtlich. Eine deutliche Überlegenheit des Produkts gemäss Beispiel 2 ergibt sich darüber hinaus auch bei den Reibungswerten Schicht/Stahl vor und nach Dauerlauf, der quasistatischen Reibung, und vor allem beim Abriebverhalten und bei der Lebensdauer. Die Verbesserung des Abriebverhaltens wird auch durch bessere Ergebnisse beim Kreiden bestätigt.

Beispiel 3

In Stahlkugelmühle von 6 l Rauminhalt, gefüllt mit 8 kg Stahlkugeln vom Durchmesser 4 bis 6 mm, wurden 900 g eines CrO$_2$ mit einer Koerzitivfeldstärke von 41 kA/m und einer spezifischen Oberfläche von 27 m²/g, zusammen mit a) 10,8 g bzw. b) 40,5 g des Produkts gemäss Beispiel A, jeweils zusammen mit 9 g Zinkoleat, 760 g eines Lösungsmittelgemisches aus gleichen Teilen Tetrahydrofuran und Dioxan, 538 g einer 13%igen Lösung eines Polyesterpolyurethans von K-Wert 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in oben genanntem Lösungsmittelgemisch und 150 g einer 20%igen Lösung eines Copolymers aus Vinylchlorid, Dimethylmaleinat und Diethylmaleinat im Verhältnis 80/10/10 und einem K-Wert von 60 in oben genanntem Lösungsmittelgemisch eingefüllt und 130 Stunden lang dispergiert. Dann wurden in der Nachphase 571 g der genannten Polyurethanlösung, 150 g der genannten Copolymerlösung und 2,2 g Siliconöl zugesetzt und weitere 10 Stunden dispergiert. Nach Entnahme aus der Mühle wurde die Dispersion unter Druck durch einen Filter mit 3 μm Poren filtriert und auf eine 12 μm dicke Polyethylenterephthalatfolie mittels eines üblichen Linealgiessers aufgetragen. Die beschichtete Folie wurde nach Durchlaufen eines Magnetfeldes zum Ausrichten der Magnetteilchen bei Temperaturen zwischen 50 und 90°C getrocknet. Nach der Trocknung wurde die Magnetschicht durch Hindurchziehen zwischen auf 70°C beheizten Walzen unter einem Liniendruck von 200 kp/cm verdichtet und geglättet (satiniert), so dass die Dicke der Magnetschicht 4,5 μm betrug und dann in 3,81 mm breite Bänder für Audioanwendung geschnitten.

Die messtechnische Auswertung erfolgte in gleicher Weise wie im Beispiel 1, lediglich mit dem Unterschied, dass die elektroakustischen Daten relativ zum Bezugsband IEC II gemessen wurden.

Die Messergebnisse sind in der Tabelle 3 zusammengestellt.

Vergleichsversuch 8

Es wurde wie im Beispiel 3 beschrieben, verfahren, jedoch wurden anstelle des Dispergierhilfsmittels gemäss Beispiel A a) 10,8 g bzw. b) 40,5 g eines handelsüblichen alkoxylierten sauren Phosphorsäureester, mit der Produktbezeichnung Gafac RE 610 von Fa. GAF Corp., verwendet.

Vergleichsversuch 9

Es wurde wie im Beispiel 3 beschrieben verfahren, jedoch wurden anstelle des Dispergierhilfsmittels gemäss Beispiel A a) 63 g bzw. b) 81 g eines handelsüblichen Dispergiermittels, aus einer Mischung eines Monophosphorsäureesters und dem Salz einer Sulfobernsteinsäure in 50%iger wässriger Lösung bestehend (Sered FA 601), verwendet.

Die Prüfergebnisse der Vergleichsversuche sind in der Tabelle 3 zusammengestellt.

Aus dem Vergleich der in der Tabelle 3 aufgezeigten Ergebnisse ergibt sich, dass das Produkt gemäss Beispiel 3 bessere Ergebnisse hinsichtlich der Magnetwerte, insbesondere der Schaltfeldverstärkung, des Richtfaktors und der gesamten elektroakustischen Daten aufweist. Die verbesserte Feinstruktur der Magnetschicht nach Beispiel 3 ist auch aus der geringeren Rauhigkeit und aus dem höheren Glanz bereits vor der Satinage ersichtlich. Deutliche Überlegenheit ergibt sich darüber hinaus in den Reibungswerten, in der Lebensdauer und dem Abriebverhalten am Recorder sowie in Kreiden.

Tabelle 1

| | Beispiel | | Vergleichsversuche | | | | | | | | | | | |
|---|---|---|---|---|---|---|---|---|---|---|---|---|---|---|
| | 1 | | 1 | | 2 | | 3 | | 4 | | 5 | | 6 | |
| | a | b | a | b | a | b | a | b | a | b | a | b | a | b |
| **Unsatiniert:** | | | | | | | | | | | | | | |
| Rauhigkeit Rz ($\mu$m) | 0,40 | 0,43 | 0,45 | 0,48 | 0,48 | 0,48 | 0,45 | 0,46 | 0,43 | 0,46 | 0,50 | 0,55 | 0,46 | 0,53 |
| Glanzwert | 67 | 70 | 58 | 60 | 61 | 60 | 61 | 60 | 62 | 61 | 62 | 59 | 60 | 58 |
| **Satiniert:** | | | | | | | | | | | | | | |
| Koerzitivfeldstärke (kA/m) | 30,3 | 30,3 | 29,1 | 29,0 | 30,2 | 30,1 | 30,1 | 30,3 | 30,3 | 30,2 | 30,2 | 30,2 | 30,2 | 30,2 |
| Remanente Magnetisierung (mT) | 158 | 160 | 157 | 158 | 160 | 159 | 152 | 158 | 155 | 157 | 155 | 159 | 155 | 158 |
| Relative Remanenz | 0,84 | 0,84 | 0,82 | 0,82 | 0,83 | 0,82 | 0,82 | 0,83 | 0,83 | 0,83 | 0,83 | 0,83 | 0,83 | 0,83 |
| Richtfaktor | 2,2 | 2,2 | 2,1 | 2,0 | 2,1 | 2,1 | 2,1 | 2,2 | 2,1 | 2,2 | 2,1 | 2,2 | 2,1 | 2,2 |
| Schaltfeldverteilung | 0,25 | 0,26 | 0,30 | 0,30 | 0,27 | 0,27 | 0,28 | 0,27 | 0,26 | 0,27 | 0,26 | 0,26 | 0,27 | 0,27 |
| **Elektroakustische Daten:** | | | | | | | | | | | | | | |
| **gegen Bezugband IEC T:** | | | | | | | | | | | | | | |
| Empfindlichkeit 315 Hz (dB) | −0,2 | −0,2 | −0,5 | −0,4 | −0,2 | −0,2 | −0,7 | −0, | −0,7 | −0,3 | −0,2 | −0,2 | −0,2 | −0,2 |
| Empfindlichkeit 10 kHz (dB) | +1,5 | +1,7 | +1,0 | +1,0 | +1,3 | +1,3 | +1,7 | +1,5 | +1,6 | +1,3 | +1,3 | +1,3 | +1,0 | +1,3 |
| Aussteuerbarkeit 315 Hz (dB) | −0,7 | −0,7 | −1,0 | −1,1 | −0,8 | −1,1 | −1,7 | −1,4 | −1,6 | −1,5 | −1,8 | −1,1 | −1,5 | −1,3 |
| Aussteuerbarkeit 10 kHz (dB) | 2,5 | +2,6 | +1,5 | +1,6 | +2,1 | +2,0 | +2,3 | +2,3 | +2,3 | +2,3 | +2,1 | +2,3 | +1,6 | +2,7 |
| **Mechanische Eigenschaften:** | | | | | | | | | | | | | | |
| **Reibungskoeffizient** | | | | | | | | | | | | | | |
| Schicht/Stahl vor Dauerlauf | 0,28 | 0,27 | 0,33 | 0,34 | 0,33 | 0,40 | 0,33 | 0,35 | 0,35 | 0,33 | 0,35 | 0,37 | 0,35 | 0,40 |
| nach Dauerlauf | 0,32 | 0,35 | 0,38 | 0,40 | 0,55 | 0,57 | 0,40 | 0,40 | 0,41 | 0,52 | 0,45 | 0,50 | 0,48 | 0,55 |
| Quasistatische Reibung | 0,30 | 0,32 | 0,34 | 0,34 | 0,51 | 0,51 | 0,35 | 0,36 | 0,34 | 0,35 | 0,34 | 0,35 | 0,35 | 0,36 |
| **Abriebverhalten am Recorder:** | | | | | | | | | | | | | | |
| Lebensdauer-Durchläufe | 100 | 100 | 95 | 80 | 100 | 100 | 100 | 80 | 90 | 100 | 100 | 100 | 100 | 42 |
| Ablagerungen Löschkopf Note | 2 | 2 | 4 | 4 | 3,5 | 3,5 | 3,5 | 3 | 3,5 | 3 | 3 | 3 | 4 | 3 |
| Ablagerungen Tonkopf Note | 2,5 | 2,5 | 5,5 | 6 | 3,5 | 3 | 3 | 3,5 | 3,5 | 3,5 | 3 | 4 | 6 | 3 |
| Ablagerungen Tonwelle Note | 1 | 1 | 2,5 | 3 | 2 | 2 | 2 | 2 | 2 | 2 | 2,5 | 2 | 2 | 2 |
| Kreiden Note | 3 | 3 | 5 | 6 | 5 | 6 | 5 | 5 | 5 | 5 | 5 | 5 | 5 | 6 |

## Tabelle 2

| | Bei-spiel | Ver-gleichs-versuch |
|---|---|---|
| **Unsatiniert:** | | |
| Rauhigkeit Rz (µm) | 0,45 | 0,64 |
| Glanzwert | 68 | 56 |
| **Satiniert:** | | |
| Koerzitivfeldstärke (kA/m) | 30,4 | 29,7 |
| Remanente Magnetisierung (mT) | 173 | 170 |
| Relative Remanenz | 0,88 | 0,87 |
| Richtfaktor | 2,9 | 2,8 |
| Schaltfeldverteilung | 0,21 | 0,24 |
| **Elektroakustische Daten:** | | |
| gegen Bezugsband IEC I: | | |
| Empfindlichkeit 315 Hz (dB) | +0,4 | +0,4 |
| Empfindlichkeit 10 kHz (dB) | +2,4 | +1,8 |
| Aussteuerbarkeit 315 Hz (dB) | ±0 | −0,3 |
| Aussteuerbarkeit 10 kHz (dB) | +2,8 | +2,0 |
| **Mechanische Eigenschaften:** | | |
| Reibungskoeffizient | | |
| Schicht/Stahl vor Dauerlauf | 0,29 | 0,33 |
| nach Dauerlauf | 0,34 | 0,50 |
| Quasistatische Reibung | 0,32 | 0,42 |
| **Abriebverhalten am Recorder:** | | |
| Lebensdauer-Durchläufe | 100 | 50 |
| Ablagerungen Löschkopf Note | 2,5 | 4 |
| Ablagerungen Tonkopf Note | 2,5· | 4,5 |
| Ablagerungen Tonwelle Note | 1 | 3,5 |
| Kreide Note | 3 | 7 |

## Tabelle 3

| | Beispiel | | Vergleichsversuch | | | |
|---|---|---|---|---|---|---|
| | 3 | | 8 | | 9 | |
| | a | b | a | b | a | b |
| **Unsatiniert:** | | | | | | |
| Rauhigkeit Rz (µm) | 0,60 | 0,61 | 0,90 | 0,92 | 0,80 | 0,85 |
| Glaswert | 30 | 30 | 25 | 24 | 26 | 25 |
| **Satiniert** | | | | | | |
| Koerzitivfeldstärke (kA/m) | 40,9 | 41,0 | 40,5 | 40,4 | 39,9 | 40,0 |
| Remanente Magnetisierung (mT) | 175 | 174 | 171 | 170 | 172 | 171 |
| Relative Remanenz | 0,89 | 0,89 | 0,88 | 0,88 | 0,89 | 0,88 |
| Richtfaktor | 3,8 | 3,7 | 3,4 | 3,3 | 3,5 | 3,4 |
| Schaltfeldverteilung | 0,26 | 0,26 | 0,27 | 0,28 | 0,27 | 0,28 |
| **Elektroakustische Daten:** | | | | | | |
| gegen Bezugsband IEC II: | | | | | | |
| Empfindlichkeit 315 Hz (dB) | +0,6 | +0,5 | +0,3 | +0,2 | +0,4 | +0,3 |
| Empfindlichkeit 10 kHz (dB) | +0,4 | +0,4 | ±0 | ±0 | −0,5 | −0,6 |
| Aussteuerbarkeit 315 Hz (dB) | +1,0 | +0,9 | +0,7 | +0,3 | +0,6 | +0,5 |
| Aussteuerbarkeit 10 kHz (dB) | +0,5 | +0,4 | +0,2 | ±0 | −0,6 | −0,7 |

Tabelle 3 (Fortsetzung)

| | Beispiel | | Vergleichsversuch | | | |
|---|---|---|---|---|---|---|
| | 3 | | 8 | | 9 | |
| | a | b | a | b | a | b |
| **Mechanische Eigenschaften:** | | | | | | |
| Reibungskoeffizient Schicht/Stahl | | | | | | |
| vor Dauerlauf | 0,26 | 0,27 | 0,32 | 0,34 | 0,34 | 0,36 |
| nach Dauerlauf | 0,32 | 0,34 | 0,45 | 0,47 | 0,50 | 0,55 |
| Quasistatische Reibung | 0,26 | 0,28 | 0,38 | 0,40 | 0,37 | 0,39 |
| **Abriebverhalten am Recorder:** | | | | | | |
| Lebensdauer-Durchläufe | 100 | 100 | 90 | 85 | 70 | 60 |
| Ablagerungen Löschkopf Note | 2,5 | 2,5 | 3,5 | 4 | 4 | 4 |
| Ablagerungen Tonkopf Note | 3 | 3 | 4 | 4 | 4 | 5 |
| Ablagerungen Tonwelle Note | 1 | 1 | 2 | 1 | 2 | 2 |
| Kreiden Note | 5 | 5 | 8 | 8 | 9 | 9 |

**Patentanspruch**

Verfahren zur Herstellung von magnetischen Aufzeichnungsträgern durch Herstellen einer Dispersion bestehend aus feinteiligem magnetischen Material, einem Dispergierhilfsmittel, den üblichen Zusatzstoffen und einer Lösung oder einer Dispersion eines Polymerbindemittels, schichtförmiges Auftragen der Dispersion auf ein nichtmagnetisierbares Trägermaterial, anschliessendes Ausrichten des anisotropen magnetischen Materials mittels eines Magnetfeldes und Trocknen der aufgebrachten Schicht, dadurch gekennzeichnet, dass das eingesetzte Dispergierhilfsmittel durch Umsetzung von

A. 70 bis 95 Gewichtsteilen eines Reaktionsproduktes aus
I. 0,5 bis 1,5 Mol Oxoalkoholen mit 6 bis 20 Kohlenstoffatomen
II. 6 bis 18 Mol Ethylenoxid und
III. 2 bis 10 Mol Propylenoxid mit
B. 5 bis 30 Gewichtsteilen Polyphosphorsäure mit einem $P_2O_5$-Gehalt von 80 bis 88% erhalten wird.

**Claim**

A process for the production of a magnetic recording medium by preparing a dispersion consisting of finely divided magnetic material, a dispersant, the conventional additives and a solution or a dispersion of a polymer binder, applying the dispersion in the form of a layer to a nonmagnetizable base, orienting the anisotropic magnetic material by means of a magnetic field and drying the applied layer, wherein the dispersant employed is obtained by reacting
A. from 70 to 95 parts by weight of a reaction product of
I. from 0.5 to 1.5 moles of an oxo alcohol of 6 to 20 carbon atoms,
II. from 6 to 18 moles of ethylene oxide and
III. from 2 to 10 moles of propylene oxide, with
B. from 5 to 30 parts by weight of a polyphosphoric acid having a $P_2O_5$ content of from 80 to 88%.

**Revendications**

Procédé de préparation de supports d'enregistrement magnétique par préparation d'une dispersion se composant d'un matériau magnétique finement divisé, d'un adjuvant de dispersion, d'additifs usuels et d'une solution ou d'une dispersion d'un liant polymère, par dépôt sous forme de couche de la dispersion d'un support non magnétisable, par orientation ultérieure du matériau magnétique anisotrope à l'aide d'un champ magnétique et séchage de la couche obtenue, caractérisé en ce que l'adjuvant de dispersion ajouté a été obtenu par réaction de
A. 70 à 95 parties en poids d'un produit de réaction de
I. 0,5 à 1,5 mole d'oxo-alcools ayant de 6 à 20 atomes de carbone.
II. 6 à 18 moles d'oxyde d'éthylène et
III. 2 à 10 moles d'oxyde de propylène avec
B. 5 à 30 parties en poids d'acide phosphorique avec une teneur en $P_2O_5$ de 80 à 88%.